# EUROPÄISCHE PATENTSCHRIFT

(11) **EP 4 511 577 B1**
(45) Veröffentlichungstag und Bekanntmachung des Hinweises auf die Patenterteilung: **01.04.2026**
(21) Anmeldenummer: 23721356.6
(22) Anmeldetag: 20.04.2023
(51) Int. Cl.: F16C 17/10, F16C 33/20, F16C 43/02

(54) **AXIAL-RADIAL-GLEITLAGER**
AXIAL-RADIAL SLIDING BEARING
PALIER LISSE AXIAL-RADIAL

(30) Priorität: 22.04.2022 DE 202022102163 U
(43) Veröffentlichungstag der Anmeldung: 26.02.2025
(73) Patentinhaber: igus SE & Co. KG, 51147 Köln (DE)
(72) Erfinder: SZEPOKAT, David, 50679 Köln (DE)
(74) Vertreter: Lippert Stachow Patentanwälte Rechtsanwälte
(86) Internationale Anmeldenummer: PCT/EP2023/060347
(87) Internationale Veröffentlichungsnummer: WO 2023/203158

(56) Entgegenhaltungen:
- DE-U1- 202004 006 697
- DE-U1- 202013 101 374

## Beschreibung

Die Erfindung betrifft ein Axial-Radial-Gleitlager, umfassend ein erstes Lagerelement in Form eines ersten Lagerrings und ein zweites Lagerelement, wobei die Lagerelemente zueinander um eine Lagerachse drehbar angeordnet sind, und das zweite Lagerelement einen im Wesentlichen U-förmigen Querschnitt bildet, um den ersten Lagerring zumindest abschnittsweise aufzunehmen, sowie Gleitelemente aus einem Polymermaterial, welche zwischen erstem und zweitem Lagerelement angeordnet sind, um die Lagerelemente axial und radial zu entkoppeln.

Derartige Axial-Radial-Gleitlager sind ausgebildet, um sowohl axiale als auch radiale Kräfte aufzunehmen und werden beispielsweise für Rundschalttische, Teilapparate, für die Gestaltung von CNC-Drehachsen etc. verwendet. Als Polymermaterial zur Herstellung der Gleitelemente kann ein tribologisch geeignetes Polymer eingesetzt werden, das in der Regel schmiermittelfrei angewendet werden kann. Ein gattungsbildendes Axial-Radial-Gleitlager ist beispielsweise in der Gebrauchsmusterschrift DE 20 2013 101 374 U1 beschrieben. Die Vorteile derartiger herkömmlicher Gleitlager sind insbesondere in der geringen Reibung der Lagerelemente zueinander, dem wartungsfreien Betrieb, der preisgünstigen Herstellung sowie der robusten Bauweise und der hohen Verschleißfestigkeit zu sehen. Die Vielzahl dieser Vorteile hat zur Folge, dass die Verbreitung solcher Lager, insbesondere als Polymer-Rundtischlager (PAT) ausgebildete Axial-Radial-Gleitlager auf den unterschiedlichsten Gebieten immer mehr zugenommen hat.

Es besteht jedoch das Bestreben, die Anwendungsbereiche derartiger Axial-Radial-Gleitlager weiter zu vergrößern, insbesondere auf solche Anwendungen, bei welchen ein vergleichsweise kleines bzw. leichtes Bauteil, beispielsweise in einem Fahrzeug, zu einem feststehenden Tragabschnitt verschwenkbar angeordnet ist, sodass die beschriebenen herkömmlichen Axial-Radial-Gleitlager, wie sie im Bereich von CNC-Maschinen verwendet werden, für andere Anwendungsbereiche überdimensioniert und damit kostenintensiv in der Herstellung und Montage gestaltet sind.

Insofern liegt der vorliegenden Erfindung die Aufgabe zugrunde, die an sich bekannten Axial-Radial-Gleitlager auch für Anwendungen bereitzustellen, bei welchen die zu verschwenkenden Bauteile zueinander im Vergleich zu herkömmlichen Axial-Radial-Gleitlagern vergleichsweise leicht und klein gehalten sind.

Diese Aufgabe löst die vorliegende Erfindung mit einem Axial-Radial-Gleitlager mit den Merkmalen von Anspruch 1. Das erfindungsgemäße Axial-Radial-Gleitlager weist ein erstes Lagerelement in Form eines ersten Lagerrings und ein zweites Lagerelement auf, wobei die Lagerelemente zueinander um eine Lagerachse drehbar angeordnet sind, und das zweite Lagerelement einen im Wesentlichen U-förmigen Querschnitt bildet, um das erste Lagerelement bzw. den ersten Lagerring zumindest abschnittsweise aufzunehmen sowie Gleitelemente aus einem Polymermaterial, welche zwischen erstem und zweitem Lagerelement angeordnet sind, um die Lagerelemente axial und radial zu entkoppeln. Das erfindungsgemäße Axial-Radial-Gleitlager zeichnet sich dadurch aus, dass das zweite Lagerelement zwei zueinander beabstandete Lagerscheibenabschnitte, insbesondere Lagerkreisscheiben und zumindest einen, zwischen den beiden Lagerscheibenabschnitten angeordneten und zu dem ersten Lagerring koaxial ausgerichteten Lagerzylinderabschnitt aufweist, wobei die Gleitelemente zumindest einen Axialgleitring zur Anordnung zwischen einander zugeordneten Radialflächen der beiden Lagerelemente und zwei Radialgleitringe zur jeweiligen Anordnung zwischen einander zugeordneten Axialflächen der beiden Lagerelemente aufweist.

Dem erfindungsgemäßen Axial-Radial-Gleitlager liegt die grundsätzliche Idee zugrunde, weitere Anwendungsfelder eines Axial-Radial-Gleitlagers, das Polymer-Gleitelemente nutzt, zu erschließen und die Gestaltung und damit den Zusammenbau derartiger Lager durch eine Miniaturisierung zu vereinfachen. Dabei hat sich herausgestellt, dass die bei herkömmlichen Axial-Radial-Gleitlagern zum Einsatz kommenden Gleitelemente mit jeweils im Wesentlichen L-förmigem Querschnitt, die in Reihe auf einem Kreisumfang zueinander angeordnet sind, wobei zwei derartiger Reihen axial aufeinanderfolgend zwischen den beiden Lagerelementen platziert sind, durch zumindest einen Axialgleitring zur Anordnung zwischen einander zugeordneten Radialflächen der beiden Lagerelemente und zwei Radialgleitringe zur jeweiligen Anordnung zwischen einander zugeordneten Axialflächen der beiden Lagerelemente ersetzt werden können, ohne dass die Zuverlässigkeit des Lagers bzw. dessen Standzeit verringert wäre. Da mit dem erfindungsgemäßen Axial-Radial-Gleitlager neben radialen und axialen Lasten auch Kippmoment-Belastungen der jeweiligen Lagerstelle trotz geringer Baugröße sicher aufgenommen werden können, reduziert sich relativ zu den herkömmlichen Axial-Radial-Gleitlagern der Aufwand zur Herstellung des Lagers, der benötigte Bauraum sowie die Kosten für die Gestaltung von Anschlusskonstruktionen und den Einbau der Lager erheblich.

In solchen Ausführungsformen, bei welchen das zweite Lagerelement zwei zueinander beabstandete Lagerkreisscheiben und zumindest einen, zwischen den beiden Lagerkreisabschnitten angeordneten und zu dem ersten Lagerring koaxial ausgerichteten Lagerzylinderabschnitt aufweist, ist das zweite Lagerelement insofern als zweiter Lagerring ausgebildet, welcher den ersten Lagerring in axialer Richtung vollständig und in radialer Richtung abschnittsweise aufnimmt.

Die Bezeichnung von Flächen des erfindungsgemäßen Gleitlagers bzw. von dessen Bauteilen als axiale Flächen meint jeweilige Flächen, die im Wesentlichen senkrecht zur axialen Richtung des Lagers bzw. zur Drehachse des Lagers liegen. In entsprechender Weise liegt eine radiale Fläche des Lagers bzw. eines seiner Bauteile im Wesentlichen senkrecht zur radialen Richtung des Lagers. In dieser Weise ist die Mantelfläche eines Zylinders als Radialfläche zu bezeichnen, auf welcher ein Radiusvektor senkrecht steht.

Die Angabe "Axialgleitring" meint einen Gleitring, welcher in Zylinderkoordinaten seine größte Erstreckung in axialer Richtung aufweist, was bedeutet, dass dessen größte Gleitfläche eine Radialfläche, insbesondere eine Zylinderfläche ist, auf welcher ein Radiusvektor senkrecht steht. In ähnlicher Weise meint die die Angabe "Radialgleitring" einen Gleitring, welcher in Zylinderkoordinaten seine größte Erstreckung in radialer Richtung aufweist, was bedeutet, dass dessen größte Gleitringfläche eine Axialfläche ist, die senkrecht zur Achse des Lagers verläuft.

Weitere erfindungsgemäße Merkmale und Weiterbildungen der Erfindung sind in der nachfolgenden allgemeinen Beschreibung, den Figuren, der Figurenbeschreibung sowie den Unteransprüchen angegeben.

Zur vollständigen Abdeckung von aneinandergrenzenden Flächen des ersten und zweiten Lagerelements durch die Gleitelemente kann vorgesehen sein, dass die axiale Höhe des Lagerzylinderabschnittes des zweiten Lagerelementes im Wesentlichen gleich der Summe der axialen Höhen der beiden Radialgleitringe und der axialen Höhe des ersten Lagerrings ist und ferner im Wesentlichen gleich der axialen Höhe des Axialgleitrings ist. Dabei kann vorgesehen sein, dass die beiden Radialgleitringe in Einbaulage mit ihrer jeweiligen radial innen liegenden Radialfläche jeweils an einem zugeordneten Abschnitt der radial außen liegenden Radialfläche des Axialgleitrings anliegen.

Zur Vereinfachung der Montage des erfindungsgemäßen Gleitlagers und zur Verminderung des Herstellungsaufwandes der Einzelbauteile des erfindungsgemäßen Lagers ist vorgesehen, dass der Axialgleitring einstückig aufgebaut und eine hülsenförmige Gestalt aufweist, die umfänglich geschlossen sein kann. Ferner ist vorgesehen, dass die Radialgleitringe als jeweilige Ringscheibe ausgebildet sind, sodass die Gleitfunktionalität zwischen erstem und zweitem Lagerelement durch drei, jeweils einstückige Gleitelemente bereitgestellt ist, wobei ferner vorgesehen werden kann, dass die beiden Ringscheiben identisch aufgebaut sind.

Je nach Ausführungsform können die beiden zueinander axial beabstandeten Lagerscheibenabschnitte des zweiten Lagerelementes in Bezug auf ihre Grundfläche nicht kreisförmig, insbesondere eckig oder oval gestaltet sein. Es kann auch vorgesehen sein, dass die beiden Lagerscheibenabschnitte des zweiten Lagerelementes als Kreisscheibenabschnitte bzw. Kreisscheiben ausgebildet sind, wobei der zwischen diesen angeordnete Lagerzylinderabschnitt je nach Ausführungsform z.B. als Zylinderhülse oder als Vollzylinder ausgebildet sein kann. In der letztgenannten Ausführungsform resultiert eine besonders hohe Stabilität des erfindungsgemäßen Axial-Radial-Gleitlagers zur Aufnahme und Weiterleitung von Betriebskräften vom beweglichen Lagerteil, das in der Regel das erste Lagerelement ist, in den ortsfest gehaltenen Lagerteil, das in der Regel durch das zweite Lagerelement des erfindungsgemäß ausgebildeten Axial-Radial-Gleitlagers bereitgestellt ist.

Es kann vorgesehen sein, dass die beiden zueinander axial beabstandeten Lagerscheibenabschnitte und der zwischen diesen angeordnete Lagerzylinderabschnitt jeweils einstückig vorliegen und zur Gestaltung des zweiten Lagerelementes miteinander verbunden, insbesondere verschraubt sind. Zur Vereinfachung des Aufbaus des zweiten Lagerelementes kann auch vorgesehen sein, dass der Lagerzylinderabschnitt mit einer der beiden Lagerscheibenabschnitte bzw. Lagerkreisscheiben einstückig gestaltet ist, wobei der andere der beiden Lagerscheibenabschnitte in Einbauposition am Lagerzylinderabschnitt befestigt wird, z.B. mittels einer Verschraubung, die insbesondere koaxial zum ersten Lagerring bzw. koaxial zum ersten Lagerelement ausgebildet sein kann.

Wie schon dargestellt kann der Lagerzylinderabschnitt als Zylinderhülse, in einer anderen Ausführungsform jedoch auch als Vollzylinder ausgebildet sein, der unter Umständen eine oder mehrere Durchführungen aufweisen kann, beispielsweise zur Realisierung einer oder mehrerer Schraubverbindungen.

In einer Ausführungsform, bei welcher einer der beiden Lagerscheibenabschnitte mit dem Lagerzylinderabschnitt integral hergestellt ist, welcher als Vollzylinder ausgebildet ist, kann zweckmäßigerweise zur Gestaltung des zweiten Lagerelementes vorgesehen sein, den zweiten Lagerscheibenabschnitt mittels einer Schraubverbindung an dem erstgenannten Teil des zweiten Lagerelementes zu befestigen, insbesondere durch eine koaxial verlaufende Schraubverbindung, beispielsweise indem sich ein Schraubbolzen durch den ersten Lagerscheibenabschnitt und den daran angeformten oder befestigten Lagerzylinderabschnittes bzw. Vollzylinder hindurch erstreckt in den zweiten Lagerscheibenabschnitt, der eine Schraubbohrung aufweist, insbesondere eine koaxial zum ersten Lagerring ausgerichtete Schraubbohrung, in welche der Schraubbolzen eingeschraubt ist.

Zur Befestigung des zweiten Lagerelements, beispielsweise an einem stationären Bauteil im Innenraum eines Fahrzeuges, kann zweckmäßigerweise vorgesehen sein, dass eine Mehrzahl von insbesondere auf einem Kreisumfang und radial zur Achse des ersten Lagerrings beabstandet angeordnete, parallel zur Achse des Lagers verlaufende Durchführungen ausgebildet sind, die sich durch die beiden Lagerscheibenabschnitte und den zumindest einen, zwischen den beiden Lagerscheibenabschnitten angeordneten und zu diesen koaxial ausgerichteten Lagerzylinderabschnitt erstrecken zur Aufnahme eines jeweiligen Befestigungsbolzens.

Das erfindungsgemäße Axial-Radial-Gleitlager eignet sich insbesondere zur Gestaltung eines Lagers mit vergleichsweise geringen Abmessungen, wie es beispielsweise bei der Verwendung eines solchen Lagers in Fahrzeugen zur schwenkbaren Befestigung eines Teils an einem Innenraum-Bauteil des Fahrzeugs verwendet werden kann. Insbesondere kann die radiale Abmessung des Lagers < 80 mm, insbesondere ≤ 60 mm betragen, vorzugsweise ≤ 40 mm, was eine Vielzahl von weiteren Anwendungsgebieten für das Lager ermöglicht. In ähnlicher Weise kann auch aufgrund des beschriebenen Aufbaus des erfindungsgemäßen Lagers dieses mit einer axialen Abmessung < 20 mm gestaltet sein, insbesondere ≤ 16 mm, vorzugsweise ≤ 12 mm.

Grundsätzlich kann vorgesehen sein, dass das erfindungsgemäße Axial-Radial-Gleitlager so ausgebildet ist, dass die beiden Lagerelemente zueinander beliebig um die Drehachse drehbar angeordnet sind, insbesondere über einen Winkelbereich, der größer als ein Vollkreis ist. Andererseits sind jedoch auch Anwendungen des erfindungsgemäßen Axial-Radial-Gleitlagers möglich, bei welchen die beiden, über das Lager schwenkbar zueinander koppelbaren Bauteile in ihrer relativen Bewegung zueinander zu beschränken sind. Beispielsweise kann in einer Anwendung die Notwendigkeit zur Realisierung einer relativen Verschwenkung mittels des Lagers über einen Winkelbereich von beispielsweise 90 oder 180° vorliegen. In einer Vielzahl von Anwendungen kann diese Beschränkung durch das Vorsehen von externen Anschlägen realisiert sein, die beispielsweise an dem mit dem Lager gekoppelten Bauteil angeordnet sein können. In einer besonders zweckmäßigen Ausführungsform kann jedoch auch vorgesehen sein, dass das erfindungsgemäße Lager selbst eine Beschränkungseinrichtung zur Beschränkung der relativen Bewegung der beiden Lagerelemente zueinander aufweist. Beispielsweise kann ein an einem der beiden Lagerelemente angeordneter Anschlag vorgesehen sein, der mit zwei an dem anderen Lagerelement angeordneten Anschlägen zusammenwirkt zur Beschränkung der relativen Verdrehung der beiden Lagerelemente zueinander um die Drehachse des Axial-Radial-Gleitlagers.

In einer zweckmäßigen Ausführungsform kann vorgesehen sein, dass die Beschränkungseinrichtung einen an einem der beiden Lagerelemente angeordneten und von diesem sich axial erstreckenden Armabschnitt aufweist, der axial in ein am anderen der beiden Lagerelemente umfänglich verlaufendes Langloch eingreift zur Beschränkung der relativen Verschwenkung der beiden Lagerelemente zueinander auf einen vorgegebenen Winkelbereich. Bei dieser Ausführungsform bilden insofern die beiden stirnseitigen Enden des Langlochs Anschläge für den sich in das Langloch erstreckenden Armabschnitt, welcher mit diesen beiden Anschlägen zur Beschränkung der Verschwenkung zusammenwirkt. Erkennbar legt die umfängliche Erstreckung des Langlochs in dieser Ausführungsform den vorgegebenen Winkelbereich fest.

In bestimmten Ausführungsformen kann es zweckmäßig sein, das Einstellen einer oder mehrerer relativen Betriebslagen der beiden Lagerelemente zueinander zu erleichtern. Hierzu kann zweckmäßigerweise die Einrichtung einer oder mehrerer Raststellungen zwischen den beiden Lagerelementen vorgesehen sein. Insbesondere kann vorgesehen sein, dass zumindest einer der beiden Lagerelemente einen Sitz für ein in diesem aufgenommenes, insbesondere mittels einer Feder kraftbeaufschlagtes, auslenkbares Rastelement aufweist und der andere der beiden Lagerelemente zumindest eine dem Rastelement zugeordnete Rastausnehmung umfasst zur wenigstens abschnittsweisen Aufnahme des auslenkbaren Rastelementes zur Bereitstellung einer lösbaren Verrastung bei einer vorgegebenen relativen Drehlage der beiden Lagerelemente zueinander. Dabei kann auch vorgesehen sein, dass der andere der beiden Lagerelemente eine Mehrzahl von umfänglich zueinander beabstandeten Rastausnehmungen aufweist zur sukzessiven Aufnahme des Rastelements bei einer Drehung der beiden Lagerelemente zueinander zur Bereitstellung einer Mehrzahl von Raststellungen, die sich in Bezug auf die relativen Drehstellungen der beiden Lagerelementen zueinander unterscheiden.

Erfindungsgemäß können die zum Zusammenwirken und komplementär ausgebildeten Gestaltungen Rastelement und Rastausnehmung an einander zugewandten Grenzflächen der beiden Lagerelemente angeordnet sein. In einer zweckmäßigen Ausführungsform kann vorgesehen sein, dass das Rastelement und die zumindest eine Rastausnehmung an jeweils einander zugewandten Radialflächen des einen und des anderen Lagerelements angeordnet sind. Dabei kann vorgesehen sein, dass das im Sitz des einen Lagerelements angeordnete Rastelement in radialer Richtung kraftbeaufschlagt und auslenkbar angeordnet ist zur Bereitstellung einer Verrastung der beiden Lagerelemente zueinander in radialer Richtung beim Einstellen einer vorgegebenen relativen Drehlage der beiden Lagerelemente zueinander. Es kann jedoch auch vorgesehen sein, dass das Rastelement und die zumindesteine Rastausnehmung an jeweils einander zugewandten Axialflächen des einen und des anderen Lagerelements angeordnet sind und dass das im Sitz des einen Lagerelements angeordnete Rastelement in axialer Richtung kraftbeaufschlagt und auslenkbar ist.

Die Gestaltung des erfindungsgemäßen Lagers, welches die Funktionalität der Verrastung der beiden Lagerelemente zueinander bereitstellt, kann derart ausgeführt sein, dass das Lösemoment zur Aufhebung der Verrastung der beiden Lagerelemente zueinander durch Aufbringung eines vorgegebenen Drehmoments auf eines der Lagerelemente erzeugbar ist, während das andere Lagerelement ortsfest gehalten ist, wobei dieses vorgegebene Drehmoment eine Drehmomentschwelle darstellt, ab welcher die Verrastung lösbar ist. Hierzu kann das Rastelement und/oder die Rastausnehmung mit entsprechenden gekrümmten Rastflächen ausgebildet sein. Zweckmäßigerweise kann beispielsweise vorgesehen sein, dass das Rastelement zumindest abschnittsweise eine kugel- oder zylinderförmige Rastfläche aufweist, die in einer Raststellung bzw. Rastposition des Rastelements zu der zumindest einen zugeordneten Rastausnehmung mit einer komplementär ausgebildeten Rastfläche dieser Rastausnehmung korrespondiert. Die Angabe Rastfläche meint insofern Anlagefläche des Rastelements bzw. der zugeordneten Rastausnehmung. Durch die beschriebenen gekrümmten Ausbildungen der Rastflächen bzw. Anlageflächen kann die gewünschte Lösbarkeit der Verrastung auf einfache Weise bereitgestellt werden. Durch eine entsprechende Gestaltung der Rastflächen des Rastelements und der Rastflächen der dem Rastelement zugeordneten Rastausnehmung kann vorgesehen sein, dass das Lösemoment abhängig von der Drehrichtung der beiden Lagerelemente zueinander unterschiedlich eingestellt ist, was bei bestimmten Anwendungen zweckmäßig sein kann.

Das erfindungsgemäß gestaltete Axial-Radial-Gleitlager eignet sich insbesondere zur Verwendung in Innenräumen von Fahrzeugen, insbesondere Luftfahrzeuge, Landfahrzeuge oder Wasserfahrzeuge. Beispielsweise kann zur schwenkbaren Befestigung eines Halte- oder Displayelements an einem Innenraum-Bauteil das erfindungsgemäße Axial-Radial-Gleitlager verwendet werden, indem das zu verschwenkende Element an einem der beiden Lagerelemente des Lagers befestigt wird und das Innenraum-Bauteil an dem anderen Lagerelement des erfindungsgemäß ausgebildeten Axial-Radial-Gleitlagers.

Die Erfindung wird im Folgenden durch das Beschreiben einer Ausführungsform nebst Abwandlungen mit Bezug auf die beiliegenden Figuren erläutert, wobei
- Figur 1: in einer perspektivischen Explosionsdarstellung ein erfindungsgemäß gestaltetes Axial-Radial-Gleitlager,
- Figur 2: die Explosionsdarstellung der Figur 1 in einer Seitendarstellung, und
- Figur 3: einen Schnitt durch das zusammengesetzte Lager in der in Figur 2 angegebenen Schnittebene III-III
zeigt.

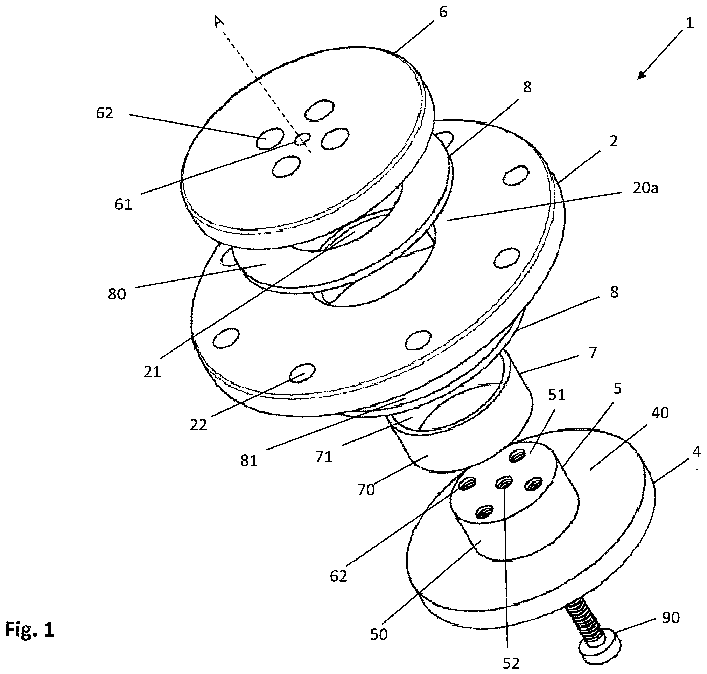

In Figur 1 ist ein erfindungsgemäßes Axial-Radial-Gleitlager 1 in einer perspektivischen Explosionsdarstellung angegeben wie es beispielsweise zur Verwendung in Innenräumen von Fahrzeugen, insbesondere Landfahrzeugen, Luftfahrzeug oder Wasserfahrzeuge ausgebildet ist, um z.B. eine schwenkbare Befestigung eines Halte- oder Tischelements an einem Innenraum-Bauteil des Fahrzeuges zu realisieren.

Das Lager 1 weist ein erstes Lagerelement in Form eines ersten Lagerrings 2 auf, der koaxial zu einem zweiten Lagerelement angeordnet und von diesem über seine gesamte axiale Erstreckung und über einen Abschnitt seiner radialen Erstreckung aufgenommen ist. In der beschriebenen Ausführungsform umfasst das zweite Lagerelement zwei koaxial zum ersten Lagerring 2 ausgerichtete Kreisscheiben 4, 6, die durch einen wiederum koaxial ausgerichteten Zylinderabsatz 5 axial beabstandet sind. Dabei sind die in der Figur untere Kreisscheibe 4 und der Zylinderabsatz 5 integral und einstückig ausgebildet, wobei die zur Kreisscheibe 4 beabstandet angeordnete Kreisscheibe 6 mit dem einstückig hergestellten Bauteil 4, 5 verschraubt ist. In der dargestellten Ausführungsform weisen hierzu die einstückig hergestellte Kreisscheibe 4 mit dem Zylinderabsatz 5 eine Mittenbohrung 52 auf, durch welche sich im zusammengebauten Zustand ein insofern koaxial verlaufender Befestigungsbolzen 90 erstreckt, der in eine zugeordnete, koaxiale Gewindebohrung 61 der Kreisscheibe 6 zur Gestaltung des beschriebenen zweiten Lagerelements umfassend die Abschnitte 4, 5, 6 einschraubbar ist.

Das zweite Lagerelement (4, 5, 6) ist insofern in einem Schnitt, welcher die Längsachse A des Gleitlagers 1 umfasst, etwa U-förmig ausgebildet. Beide Lagerelemente 2, (4, 5, 6) können aus einem gleichen oder unterschiedlichen Metallmaterial wie Aluminium oder Stahl ausgebildet sein. Es ist jedoch auch möglich, zumindest einen des Lagerelemente oder beide aus einem Kunststoffmaterial, insbesondere zumindest abschnittsweise, auszubilden.

In einer nicht dargestellten Ausführungsform kann auch vorgesehen sein, dass das zweite Lagerelement (4, 5, 6) durch Verbinden, insbesondere Verschrauben, von drei Einzelbauteilen, namentlich den beiden Kreisscheiben 4, 6 und dem zu den Kreisscheiben getrennt hergestellten Zylinderabsatz 5 gestaltet sein kann. In dieser Ausführungsform kann hierzu wie in der Ausführungsform, in welcher das zweite Lagerelement zwei Einzelbauteile umfasst, auch ein einzelner, koaxial zur Achse A des Lagers verlaufender Schraubbolzen 90 dienen, der wie obenstehend angegeben sich axial durch die Kreisscheiben 4,6 und den Zylinderabsatz 5 hindurch erstreckt und dabei in die Gewindebohrung 61 der in der Figur 1 oberen Kreisscheibe des Lagers eingeschraubt ist.

Im zusammengesetzten Zustand des erfindungsgemäß gestalteten Axial-Radial-Gleitlagers der Figur 1 sind die beiden Lagerelemente, d. h. der erste Lagerring 2 und das durch die Abschnitte bzw. Bauteile 4, 5, 6 bereitgestellte zweite Lagerelement relativ zueinander um eine Drehachse A drehbar angeordnet. Um die Reibung zwischen den zueinander bewegbaren Bauteilen bzw. Flächen zu minimieren, umfasst das Gleitlager 1 in der beschriebenen Ausführungsform drei einzelne Gleitelemente, die zwischen erstem und zweitem Lagerelement angeordnet sind, um die Lagerelemente axial und radial zu entkoppeln. Ein erstes Gleitelement ist als zylinderförmige Gleithülse 7 ausgebildet mit einer zylinderförmigen Innenmantelfläche 71 und einer zylinderförmigen Außenmantelfläche 70. Der Innendurchmesser der Gleithülse 7 ist an den Durchmesser des Zylinderabsatzes 5 so angepasst, dass im zusammengesetzten Zustand des Lagers die Zylinderinnenmantelfläche 71 der Gleithülse 7, die als Radialfläche wirkt, an der Zylindermantelfläche 50 des Zylinderabsatzes 5 anliegt, die wiederum eine Radialfläche darstellt. In gleicher Weise ist der Außendurchmesser der Gleithülse 7 an den Innendurchmesser der Bohrung des ersten Lagerrings 2 derart angepasst, dass im zusammengesetzten Zustand des erfindungsgemäß ausgebildeten Lagers die Zylinderaußenmantelfläche 70 der Gleithülse 7, die insofern als Radialfläche ausgebildet ist, an der radial innenliegenden Zylinderfläche 21 des ersten Lagerrings 2, welche die Innenbohrung des ersten Lagerrings 2 festlegt, anliegt.

Zur Entkopplung von einander zugeordneten Axialflächen des ersten Lagerrings 2 und der beiden Kreisscheiben 4, 6 sind zwei durch die axiale Dicke des Kreisrings 2 beabstandete Gleitringe 8 vorgesehen, die hier auch als Radialgleitringe bezeichnet sind, da die radiale Erstreckung ihrer Gleitflächen größer als die axiale Erstreckung ihrer Gleitflächen ist.

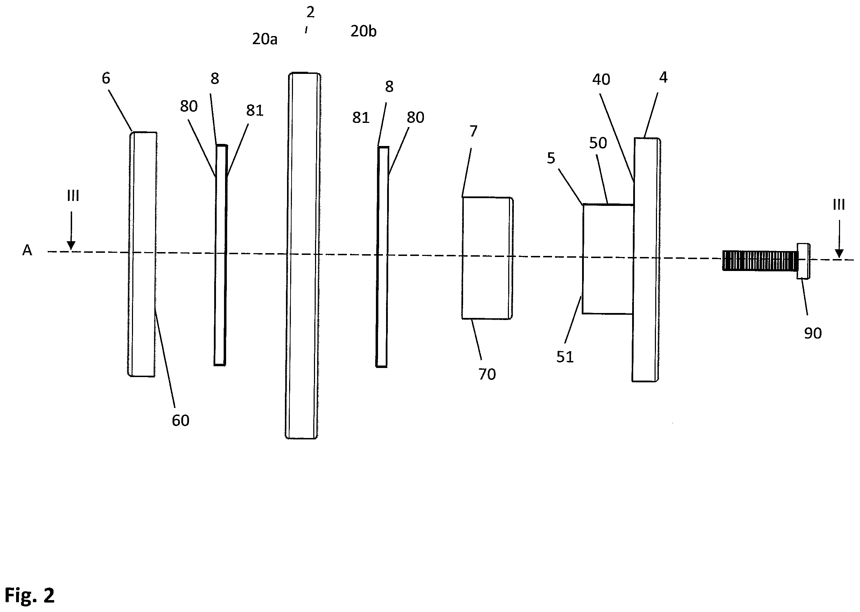

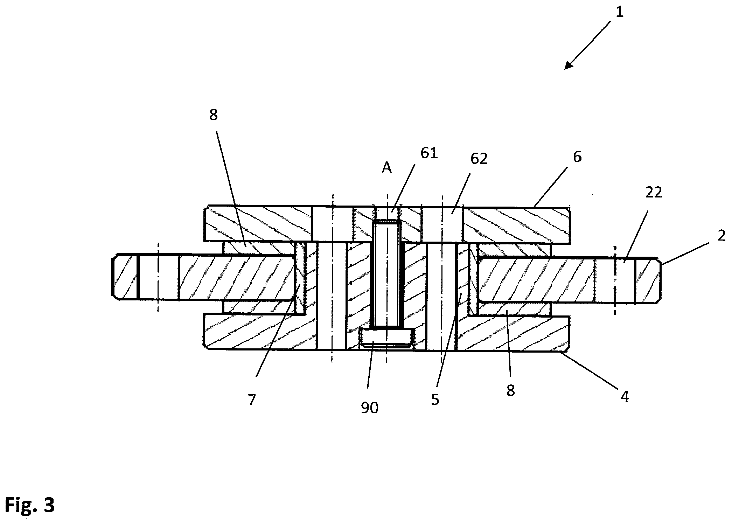

Die gegenseitigen Anlagen der einander zugeordneten Axialflächen der Lagerelemente sowie der Gleitringe 8 wird im Folgenden nun auch mit Bezug auf Figur 2 erläutert, welche die Explosionsdarstellung des erfindungsgemäßen Axial-Radial-Gleitlagers der Figur 1 in einer Seitenansicht zeigt mit Angabe der relevanten Axialflächen, d. h. Flächen, die normal zur Axialrichtung und damit zur Drehachse A des Lagers verlaufen. In der beschriebenen Ausführungsform ist der Durchmesser der Mittenbohrung der Gleitringe 8 an den Außendurchmesser der Gleithülse 7 angepasst, derart, dass im zusammengesetzten Zustand des Lagers die jeweilige Gleitringe 8 mit ihrer die Mittenbohrung festlegenden Zylinderfläche an der Außenmantelfläche 70 der Gleithülse 7 anliegt, was aus der untenstehend erläuterten Schnittdarstellung der Figur 3 ersichtlich ist.

Der jeweilige Gleitring 8 weist sich gegenüberliegende ebene Gleitflächen 80, 81 auf, die hier als Axialflächen bezeichnet sind, wobei die axial außen liegende Axialfläche 80 im zusammengesetzten Zustand des Lagers an einer zugeordneten Axialfläche 60 der Kreisscheibe 6 bzw. der axial innen liegenden Axialfläche 40 der Kreisscheibe 4 anliegt. In gleicher Weise liegt die jeweilige axial innenseitige Axialfläche 81 an einer zugeordneten Axialfläche 20a bzw. 20b des ersten Lagerrings 2 an zur beschriebenen Entkopplung der beiden Lagerelemente in axialer Richtung.

Allgemein können die Gleitelemente aus einem für tribologische Zwecke einsetzbaren Polymermaterial hergestellt sein, insbesondere durch ein Spritzgussverfahren. Dagegen erfolgt die Entkopplung von erstem Lagerelement und zweitem Lagerelement durch das Vorsehen der Gleithülse 7, die radial zwischen dem Zylinderabsatz 5 und dem ersten Lagerring 2 angeordnet ist. Zumindest eine der Gleitringe kann in einer Ausführungsform auch eine Sandwichstruktur in axialer Richtung umfassen in der Form von mehreren, aufeinanderliegenden Kreisringscheiben, wobei die axiale Erstreckung des Sandichstruktur durch die Summe der axialen Erstreckungen der aufeinanderliegenden Kreisringscheiben gegeben ist.

Wie erläutert kann das erfindungsgemäße Axial-Radial-Gleitlager der Figuren 1, 2 zur relativen Verdrehung zweier Bauteile, beispielsweise in einem Innenraum eines Fahrzeuges eingesetzt werden. Hierbei weist das zweite Lagerelement mit den Abschnitte 4, 5, 6 Befestigungsmittel zur Befestigung an einem ersten Bauteil und das zweite Lagerelement 2 Befestigungsmittel zur Befestigung an dem zweiten Bauteil des Fahrzeuges auf. In der beschriebenen Ausführungsform können hierzu am zweiten Lagerelement (4, 5, 6) Durchgangsbohrungen 62 vorgesehen sein, die sich sowohl durch beide Kreisscheiben 4, 6 als auch durch den Zylinderabsatz 5 erstrecken und beispielsweise genutzt werden können, um das zweite Lagerelement (4, 5, 6) an einem ortsfest bzw. feststehenden Abschnitt oder Bauteil zu befestigen, z.B. mittels einer Schraubverbindung, bei welcher sich ein jeweiliger Schraubbolzen durch eine zugeordnete Durchgangsbohrung erstreckt und mit dem zweiten Bauteil des Fahrzeuges verschraubt ist. In ähnlicher Weise kann der erste Lagerring 2 radial außen zu den Gleitringe 8 eine Mehrzahl von umfänglich beabstandeten Befestigungsbohrungen 22 aufweisen, über welche ein weiteres Bauteil, hier das zum zweiten Lagerelement bewegliche Bauteil durch Verschrauben mit dem ersten Lagerelement bzw. dem ersten Lagerring verbunden werden.

Figur 3 zeigt das erfindungsgemäß gestaltete Axial-Radial-Gleitlager der Figuren 1, 2 im zusammengesetzten Zustand in einer Schnittdarstellung, wobei die Schnittebene die Achse A des Lagers enthält und in Figur 2 mit dem Bezug III-III angegeben ist. Erkennbar ist insbesondere die einstückige Gestalt des ersten Bauteils (4, 5) des zweiten Lagerelements (4, 5, 6) in der beschriebenen Ausführungsform, das mit der Kreisscheibe 6 durch eine koaxial zur Drehachse des Lagers A verlaufende Schraubverbindung zur Bereitstellung des zweiten Lagerelements verbunden ist, wobei das zweite Lagerelement im Schnitt U-förmig ausgebildet ist zur vollständigen axialen Aufnahme und zur teilweise radialen Aufnahme des ersten Lagerrings 2.

In der beschriebenen Ausführungsform erstreckt sich die Gleithülse 7 axial über die gesamte axiale Aufnahme des zweiten Lagerelementes, d. h. die Summe der axialen Erstreckungen der beiden Gleitringe 8 sowie des ersten Lagerrings 5 entspricht, d.h. ist identisch der axialen Höhe der Gleithülse 7. In einer nicht dargestellten Ausführungsform kann auch vorgesehen sein, dass der Innendurchmesser der Gleitringe 8 angepasst, d. h. identisch ist mit dem Außendurchmesser des Zylinderabsatzes 5, sodass die Gleitringe mit ihrer innenseitigen radialen Stirnfläche an der Zylindermantelfläche 50 des Zylinderabsatzes 5 anliegen und die axiale Erstreckung der Gleithülse 7 in Bezug auf die axiale Erstreckung der Aufnahme des zweiten Lagerelementes (4, 5, 6), welche durch die axiale Beabstandung der beiden Kreisscheiben 4, 5 festgelegt ist, reduziert ist um die doppelte axiale Erstreckung einer Gleitringe 8.

In einer nicht dargestellten Ausführungsform kann das erfindungsgemäß gestaltete Axial-Radial-Gleitlager eine Beschränkungseinrichtung aufweisen zur Beschränkung der relativen Bewegung der beiden Lagerelemente 2; (4, 5, 6) zueinander. Hierzu kann beispielsweise ein sich an einem radialen Außenabschnitt einer Kreisscheibe 4, 6 angeformter und axial verlaufender Arm vorgesehen sein, der sich in eine am ersten Lagerring 5 angeordnete, umfänglich verlaufende Durchführung in Form eines umfänglich, d.h. auf einem Kreislinienabschnitt verlaufenden Langlochs hinein erstreckt, sodass die relative Bewegung der beiden Lagerelemente 2, (4, 5, 6) zueinander beschränkt ist. Dieser Axialarm kann zur Erhöhung der Betriebsfestigkeit insbesondere an beiden Kreisscheiben befestigt sein und sich zwischen diesen axial erstrecken.

### Bezugszeichenliste

- 1: Axial-Radial-Gleitlager, Lager
- 2: erster Lagerring, erstes Lagerelement
- 4: Lagerscheibenabschnitt, Kreisscheibe
- 5: Zylinderabsatz, Lagerzylinderabschnitt
- 6: Lagerscheibenabschnitt, Kreisscheibe
- 7: Gleithülse, Axialgleitring
- 8: Gleitring, Radialgleitring
- 20a, b: Axialfläche des ersten Lagerrings
- 21: Radialfläche, Zylinderfläche
- 22: Befestigungsbohrung
- 40: Axialfläche der Kreisscheibe
- 50: Radialfläche, Zylindermantelfläche
- 51: Axialfläche
- 52: Mittenbohrung
- 60: Axialfläche
- 61: Gewindebohrung
- 62: Befestigungsbohrung
- 70: Radialfläche, Zylinderaußenmantelfläche
- 71: Radialfläche, Zylinderinnenmantelfläche
- 80: Axialfläche
- 81: Axialfläche
- 90: Befestigungsbolzen
- A: Drehachse

## Patentansprüche

1. Axial-Radial-Gleitlager (1) umfassend
- ein erstes Lagerelement in Form eines ersten Lagerrings (2) und
- ein zweites Lagerelement (4, 5, 6), wobei die Lagerelemente zueinander um eine Lagerachse (A) drehbar angeordnet sind, und das zweite Lagerelement (4, 5, 6) einen im Wesentlichen U-förmigen Querschnitt bildet, um den ersten Lagerring (2) zumindest abschnittsweise aufzunehmen, sowie
- Gleitelemente (7,8) aus einem Polymermaterial, welche zwischen erstem und zweitem Lagerelement angeordnet sind, um die Lagerelemente axial und radial zu entkoppeln, wobei das zweite Lagerelement (4, 5, 6) zwei zueinander beabstandete Lagerscheibenabschnitte (4, 6) und zumindest einen, zwischen den beiden Lagerscheibenabschnitten angeordneten und zu dem ersten Lagerring (2) koaxial ausgerichteten Lagerzylinderabschnitt (5) aufweist, wobei die Gleitelemente (7, 8) zumindest einen Axialgleitring (7) zur Anordnung zwischen einander zugeordneten Radialflächen (50, 21) der beiden Lagerelementen und zwei Radialgleitringe (8) zur Anordnung zwischen einander zugeordneten Axialflächen (60, 20a, 40, 20b) der beiden Lagerelementen aufweisen,
**dadurch gekennzeichnet, dass** der Axialgleitring (7) einstückig aufgebaut und eine hülsenförmige Gestalt aufweist, und dass die Radialgleitringe (8) als jeweilige Ringscheibe ausgebildet sind, sodass die Gleitfunktionalität zwischen erstem und zweitem Lagerelement (2, 4, 5, 6) durch drei, jeweils einstückige Gleitelemente bereitgestellt ist.

2. Axial-Radial-Gleitlager (1) nach Anspruch 1,
**dadurch gekennzeichnet, dass** die axiale Höhe des Lagerzylinderabschnittes (5) im Wesentlichen gleich der Summe der axialen Höhen der beiden Radialgleitringe (8) und der axialen Höhe des ersten Lagerrings (2) ist und ferner im Wesentlichen gleich der axialen Höhe des Axialgleitrings (7) ist.

3. Axial-Radial-Gleitlager (1) nach Anspruch 1 oder 2,
**dadurch gekennzeichnet, dass** der Lagerzylinderabschnitt (5) mit einer der beiden Lagerscheibenabschnitte (4, 6) einstückig gestaltet ist, an dem der andere der beiden Lagerscheibenabschnitte (6, 4) befestigt ist.

4. Axial-Radial-Gleitlager (1) nach Anspruch 1, 2 oder 3,
**dadurch gekennzeichnet, dass** der Lagerzylinderabschnitt (5) als Vollzylinder ausgebildet ist und zumindest einer der beiden Lagerscheibenabschnitte (4, 6) mittels einer Schraubverbindung, insbesondere einer koaxial zum ersten Lagerelement verlaufenden Schraubverbindung an dem Lagerzylinderabschnitt (5) befestigt ist.

5. Axial-Radial-Gleitlager (1) nach einem der Ansprüche 1 bis 4, **dadurch gekennzeichnet, dass** eine Mehrzahl von radial zur Achse des Lagerrings (2) beabstandet angeordnete, axiale Durchführungen (62) durch die beiden Lagerscheibenabschnitte (4, 6) und den zumindest einen, zwischen den beiden Lagerscheibenabschnitten angeordneten und zu diesen mittig und koaxial ausgerichteten Lagerzylinderabschnitt (5) ausgebildet sind.

6. Axial-Radial-Gleitlager (1) nach einem der Ansprüche 1 bis 5, **dadurch gekennzeichnet, dass** die radiale Abmessung des Lagers (1) < 80 mm, insbesondere ≤ 60 mm, vorzugsweise ≤ 40 mm und die axiale Abmessung des Lagers < 20 mm, insbesondere ≤ 16 mm, vorzugsweise ≤ 12 mm beträgt.

7. Axial-Radial-Gleitlager (1) nach einem der Ansprüche 1 bis 6, **dadurch gekennzeichnet, dass** das Lager (1) eine Beschränkungseinrichtung zur Beschränkung der relativen Bewegung der beiden Lagerelemente zueinander aufweist.

8. Axial-Radial-Gleitlager (1) nach Anspruch 7,
**dadurch gekennzeichnet, dass** die Beschränkungseinrichtung zumindest einen an dem ersten Lagerelement (2) angeordneten ersten Anschlag umfasst, und zumindest einen an dem zweiten Lagerelement (4, 5, 6) angeordneten zweiten Anschlag, wobei die beiden, einander zugeordneten Anschläge zur Beschränkung der relativen Drehung der beiden Lagerelemente zueinander zusammenwirken.

9. Axial-Radial-Gleitlager (1) nach einem der Ansprüche 7 oder 8, **dadurch gekennzeichnet,**
**dass** die Beschränkungseinrichtung einen an einem der beiden Lagerelemente (2; 4, 5, 6) angeordneten und von diesem sich axial erstreckenden Armabschnitt aufweist, der axial in ein am anderen der beiden Lagerelemente umfänglich verlaufendes Langloch eingreift zur Beschränkung der relativen Verschwenkung der beiden Lagerelemente zueinander auf einen vorgegebenen Winkelbereich.

10. Axial-Radial-Gleitlager (1) nach einem der Ansprüche 1 bis 9, **dadurch gekennzeichnet, dass** zumindest einer der beiden Lagerelemente (2) einen Sitz für ein in diesem aufgenommenes, insbesondere mittels einer Feder, kraftbeaufschlagtes und auslenkbares Rastelement aufweist und der andere der beiden Lageringe (4, 5, 6) zumindest eine dem Rastelement zugeordnete Rastausnehmung umfasst zur wenigstens abschnittsweisen Aufnahme des auslenkbaren Rastelementes zur Bereitstellung einer lösbaren Verrastung bei einer vorgegebenen relativen Drehlage der beiden Lagerelemente zueinander.

11. Verwendung eines Axial-Radial-Gleitlagers (1) nach einem der Ansprüche 1 bis 10 in Innenräumen von Fahrzeugen, insbesondere Luftfahrzeugen, Landfahrzeugen oder Wasserfahrzeugen.

12. Verwendung eines Axial-Radial-Gleitlagers (1) nach Anspruch 11, **dadurch gekennzeichnet, dass** das Lager zur schwenkbaren Befestigung eines Halte- oder Tischelements an einem Innenraum-Bauteil des Fahrzeuges angeordnet ist, bei dem das Halte- oder Tischelement an einem der beiden Lagerelemente (2) und das Innenraum-Bauteil an dem anderen der beiden Lagerelemente (4, 5, 6) befestigt ist.

## Claims

1. Axial and radial sliding bearing (1) comprising
- a first bearing element in the form as a first bearing ring (2) and
- a second bearing element (4, 5, 6), wherein the bearing elements are arranged rotatably to one another about a bearing axis (A), and the second bearing element (4, 5, 6) forms a substantially U-shaped cross-section in order to at least partially accommodate the first bearing ring (2), as well as
- sliding elements (7,8) made of a polymer material that are arranged between the first and the second bearing element in order to axially and radially decouple the bearing elements,
wherein the second bearing element (4, 5, 6) comprises two bearing disc portions spaced from one another (4, 6) and at least one bearing cylinder portion (5) arranged between the two bearing disc portions and coaxially oriented to the first bearing ring (2), wherein the sliding elements (7, 8) have at least one axial sliding ring (7) to be arranged between radial surfaces associated with one another (50, 21) of the two bearing elements and two radial sliding rings (8) to be arranged between axial surfaces associated with one another (60, 20a, 40, 20b) of the two bearing elements, **characterized in that**
the axial sliding ring (7) is constructed in one piece and has a sleeve shape and that the radial sliding rings (8) are configured as respective ring discs so that the sliding functionality between the first and the second bearing element (2, 4, 5, 6) is provided by three sliding elements, each of them in one piece.

2. Axial and radial sliding bearing (1) according to claim 1,
**characterized in that**
the axial height of the bearing cylinder portion (5) is substantially equal to the sum of the axial heights of the two radial sliding rings (8) and of the axial height of the first bearing ring (2) and moreover is substantially equal to the axial height of the axial sliding ring (7).

3. Axial and radial sliding bearing (1) according to claim 1 or 2,
**characterized in that**
the bearing cylinder portion (5) is configured in one piece with one of the two bearing disc portions (4, 6) to which the other of the two bearing disc portions (6, 4) is fixed.

4. Axial and radial sliding bearing (1) according to claim 1, 2 or 3,
**characterized in that**
the bearing cylinder portion (5) is configured as a full cylinder and at least one of the two bearing disc portions (4, 6) is fixed to the bearing cylinder portion (5) by means of a screw connection, in particular by a screw connection extending coaxially to the first bearing element.

5. Axial and radial sliding bearing (1) according to one of the claims 1 to 4,
**characterized in that**
a multitude of axial ducts (62) arranged radially spaced from the axis of the bearing ring (2) are configured through the two bearing disc portions (4, 6) and the at least one bearing cylinder portion (5) arranged between the two bearing disc portions and oriented centered and coaxially thereto.

6. Axial and radial sliding bearing (1) according to one of the claims 1 to 5,
**characterized in that**
the radial dimension of the bearing (1) < 80 mm, in particular≤ 60 mm, preferably ≤ 40 mm and the axial dimension of the bearing < 20 mm, in particular ≤ 16 mm, preferably ≤ 12 mm.

7. Axial and radial sliding bearing (1) according to one of the claims 1 to 6,
**characterized in that**
the bearing (1) comprises a restricting means for restricting the relative movement of the two bearing elements to one another.

8. Axial and radial sliding bearing (1) according to claim 7,
**characterized in that**
the restricting means comprises at least one first abutment arranged on the first bearing element (2) and at least one second abutment arranged on the second bearing element (4, 5, 6), wherein the two abutments associated to one another interact for restricting the relative rotation of the two bearing elements to one another.

9. Axial and radial sliding bearing (1) according to one of the claims 7 or 8,
**characterized in that**
the restricting means comprises an arm portion arranged on one of the two bearing elements (2; 4, 5, 6) and extending axially therefrom that engages axially into an elongated hole extending circumferentially on the other of the two bearing elements for restricting the relative pivoting of the two bearing elements to one another to a predetermined angle range.

10. Axial and radial sliding bearing (1) according to one of the claims 1 to 9,
**characterized in that**
at least one of the two bearing elements (2) has a seat for a latching element accommodated therein, in particular a springloaded deflectable latching element, and the other of the two bearing elements (4, 5, 6) comprises at least one latching recess associated to the latching element for accommodating at least partially the deflectable latching element for providing a releasable latch for a predetermined relative rotary position of the two bearing elements to one another.

11. Use of an axial and radial sliding bearing (1) according to one of the claims 1 to 10 in the interior of vehicles, in particular of aircraft, land vehicles or watercraft.

12. Use of an axial and radial sliding bearing (1) according to claim 11,
**characterized in that**
the bearing is arranged for the pivotable fixing of a holding or a table element to a component of the interior of the vehicle, wherein the holding or table element is fixed to one of the bearing elements (2) and the component of the interior to the other of the two bearing elements (4, 5, 6).

## Revendications

1. Palier lisse axial et radial (1) comprenant
- un premier élément de palier sous forme d'une première bague de palier (2) et
- un deuxième élément de palier (4, 5, 6), les éléments de palier étant disposés de manière rotative l'un par rapport à l'autre autour d'un axe de palier (A), et le deuxième élément de palier (4, 5, 6) formant une section transversale sensiblement en forme de U afin de recevoir au moins en partie la première bague de palier (2), ainsi que
- des éléments coulissants (7, 8) en un matériau polymère qui sont disposés entre le premier et le deuxième élément de palier afin de découpler axialement et radialement les éléments de palier, le deuxième élément de palier (4, 5, 6) comprenant deux portions de disque de palier (4, 6) espacées l'une de l'autre et au moins une portion de cylindre de palier (5) disposée entre les deux portions de disque de palier et orientée coaxialement par rapport à la première bague de palier (2), les éléments coulissants (7, 8) présentant au moins une bague coulissante axiale (7) à disposer entre des surfaces radiales associées l'une à l'autre (50, 21) des deux éléments de palier et deux bagues coulissantes radiales (8) à disposer entre des surfaces axiales associées l'une à l'autre (60, 20a, 40, 20b) des deux éléments de palier,
**caractérisé en ce que** la bague coulissante axiale (7) est constituée d'une seule pièce et présente une forme du type douille et **en ce que** les bagues coulissantes radiales (8) sont réalisées sous forme de disque annulaire respectif de sorte que la fonctionnalité coulissante entre le premier et le deuxième élément de palier (2, 4, 5, 6) soit fournie par trois éléments coulissants, chacun d'eux d'une seule pièce.

2. Palier lisse axial et radial (1) selon la revendication 1,
**caractérisé en ce que**
la hauteur axiale de la portion de cylindre de palier (5) est sensiblement égale à la somme des hauteurs axiales des deux bagues coulissantes radiales (8) et de la hauteur axiale de la première bague de palier (2) et est en outre sensiblement égale à la hauteur axiale de la bague coulissante axiale (7).

3. Palier lisse axial et radial (1) selon la revendication 1 ou 2,
**caractérisé en ce que**
la portion de cylindre de palier (5) est conçue d'une seule pièce avec l'une des deux portions de disque de palier (4, 6) à laquelle l'autre des deux portions de disque de palier (6, 4) est fixée.

4. Palier lisse axial et radial (1) selon la revendication 1, 2 ou 3,
**caractérisé en ce que**
la portion de cylindre de palier (5) est réalisée sous forme de cylindre plein et au moins l'une des deux portions de disque de palier (4, 6) est fixée à la portion de cylindre de palier (5) au moyen d'une liaison vissée, en particulier par une liaison vissée s'étendant coaxialement par rapport au premier élément de palier.

5. Palier lisse axial et radial (1) selon l'une quelconque des revendications 1 à 4,
**caractérisé en ce que**
une pluralité de canaux axiaux (62) disposés radialement espacés de l'axe de la bague de palier (2) sont réalisés à travers les deux portions de disque de palier (4, 6) et l'au moins une portion de cylindre de palier (5) qui est disposée entre les deux portions de disque de palier et orientée de manière centrée et coaxialement par rapport à celles-ci.

6. Palier lisse axial et radial (1) selon l'une quelconque des revendications 1 à 5,
**caractérisé en ce que**
la dimension radiale du palier (1) est < 80 mm, en particulier ≤ 60 mm, de préférence ≤ 40 mm et la dimension axiale du palier est < 20 mm, en particulier ≤ 16 mm, de préférence ≤ 12 mm.

7. Palier lisse axial et radial (1) selon l'une quelconque des revendications 1 à 6,
**caractérisé en ce que**
le palier (1) comprend un moyen de limitation pour limiter le mouvement relatif des deux éléments de palier l'un par rapport à l'autre.

8. Palier lisse axial et radial (1) selon la revendication 7,
**caractérisé en ce que**
le moyen de limitation comprend au moins une première butée disposée sur le premier élément de palier (2) et au moins une deuxième butée disposée sur le deuxième élément de palier (4, 5, 6), les deux butées associées l'une à l'autre coopérant pour limiter la rotation relative des deux éléments de palier l'un par rapport à l'autre.

9. Palier lisse axial et radial (1) selon l'une des revendications 7 ou 8,
**caractérisé en ce que**
le moyen de limitation comprend une portion de bras disposée sur l'un des deux éléments de palier (2 ; 4, 5, 6) et s'étendant axialement à partir de celui-ci, qui s'engage axialement dans un trou oblong s'étendant circonférentiellement sur l'autre des deux éléments de palier pour limiter le pivotement relatif des deux éléments de palier l'un par rapport à l'autre à une plage angulaire prédéterminée.

10. Palier lisse axial et radial (1) selon l'une des revendications 1 à 9,
**caractérisé en ce que**
au moins l'un des deux éléments de palier (2) présente un logement pour un élément d'encliquetage reçu dans celui-ci, en particulier un élément d'encliquetage pouvant être dévié sollicité par ressort, et l'autre des deux éléments de palier (4, 5, 6) comprend au moins un évidement d'encliquetage associé à l'élément d'encliquetage pour recevoir au moins en partie l'élément d'encliquetage pouvant être dévié pour fournir un encliquetage libérable pour une position de rotation relative prédéterminée des deux éléments de palier l'un par rapport à l'autre.

11. Utilisation d'un palier lisse axial et radial (1) selon l'une des revendications 1 à 10 à l'intérieur de véhicules, en particulier d'aéronefs, de véhicules terrestres ou de bateaux.

12. Utilisation d'un palier lisse axial et radial (1) selon la revendication 11,
**caractérisée en ce que**
le palier est disposé pour la fixation pivotante d'un élément de maintien ou d'un élément de table à un composant de l'intérieur du véhicule, l'élément de maintien ou de table étant fixé à l'un des éléments de palier (2) et le composant de l'intérieur à l'autre des deux éléments de palier (4, 5, 6).
